# EUROPÄISCHE PATENTSCHRIFT

(11) **EP 2 127 569 B1**
(45) Veröffentlichungstag und Bekanntmachung des Hinweises auf die Patenterteilung: **22.02.2012**
(21) Anmeldenummer: 09158347.6
(22) Anmeldetag: 21.04.2009
(51) Int. Cl.: A47J 31/36

(54) **Brühvorrichtung**
Brewing device
Dispositif d'ébouillantage

(30) Priorität: 27.05.2008 DE 202008007130 U
(43) Veröffentlichungstag der Anmeldung: 02.12.2009
(73) Patentinhaber: MELITTA HAUSHALTSPRODUKTE GmbH & Co. Kommanditgesellschaft, D-32427 Minden (DE)
(72) Erfinder: Aengenheyster, Dr. Gerald, 32427, Minden (DE); Weinreich, Steffen, 32427, Minden (DE)
(74) Vertreter: Dantz, Jan Henning

(56) Entgegenhaltungen:
- WO-A-2005/120312
- DE-A1- 19 629 239

## Beschreibung

Die vorliegende Erfindung betrifft eine Brühvorrichtung, insbesondere für einen Kaffeeautomaten, mit einer Brühkammer, die mit pulverförmigen Kaffeemehl befüllbar ist und mindestens einen verschiebbaren Wandabschnitt zum Komprimieren des Kaffeemehls aufweist, wobei die Brühkammer einen Einlass für heißes Wasser und einen Auslass für die Extraktionsflüssigkeit aufweist.

Es gibt Brühvorrichtungen in Kaffeeautomaten, bei denen Kaffeemehl in eine Brühkammer eingefüllt wird, die dann einen verschiebbaren Wandabschnitt zum Komprimieren des Kaffeepulvers aufweist. Hierfür ist ein Elektromotor vorgesehen, der an seiner Abtriebswelle mit einem Getriebe gekoppelt ist, mittels dem ein Kolben verschiebbar geführt ist, der den Wandabschnitt linear bewegen kann. Ein solcher elektrischer Antrieb erfordert eine Vielzahl von Bauteilen und erfordert einen erheblichen Steuerungsaufwand. Zudem benötigt ein solcher Antrieb relativ viel Bauraum und ist im Betrieb laut. Eine ähnlich Brühvorrichtung ist z.B. aus der DE 196 29 239 A bekannt.

Es ist daher Aufgabe der vorliegenden Erfindung eine Brühvorrichtung zu schaffen, die auf einfache Weise eine Komprimierung des Kaffeemehls innerhalb der Brühkammer ermöglicht und die oben genannten Nachteile vermeidet.

Diese Aufgabe wird mit einer Brühvorrichtung mit den Merkmalen des Anspruches 1 gelöst.

Erfindungsgemäß ist der verschiebbare Wandabschnitt der Brühkammer durch mindestens eine Kolbenstange bewegbar, die durch Erhitzung oder Kühlung eines ausdehnbaren Mediums bewegbar ist. Dadurch entfällt die Notwendigkeit, einen Elektromotor mit einem Getriebe einzusetzen, da das Verschieben nur durch die Betätigung des ausdehnbaren Mediums erfolgen kann. Das Verschieben des Wandabschnittes kann dabei nahezu geräuschlos erfolgen, so dass neben der Einsparung der elektromechanischen Komponenten auch die Lautstärke des Antriebes deutlich reduziert ist. Durch den Wegfall des Motors und des Getriebes kann der Bauraum des Antriebes deutlich verringert werden.

Gemäß einer bevorzugten Ausgestaltung der Erfindung kann das ausdehnbare Medium durch heißes oder kaltes Wasser erhitzt oder gekühlt werden. Insbesondere beim Einsatz der Brühvorrichtung in einem Kaffeeautomaten kann das Gerät ohnehin heißes oder kaltes Wasser zur Verfügung stellen, da dies zum Brühen und Spülen notwendig ist. Da die Leitungen und die Heizeinrichtung geräteseitig zum Großteil vorhanden sind, kann mit geringem Aufwand das ausdehnbare Medium zusätzlich durch das vorhandene Leitungssystem erhitzt oder gekühlt werden.

Vorzugsweise ist das ausdehnbare Medium aus einem schmelzbaren Wachs gebildet. Beim Erhitzen des Wachses verflüssigt sich dieses, wobei eine erhebliche Volumenzunahme stattfindet. Diese Volumenzunahme kann genutzt werden, um die Kolbenstange zu verschieben. Auch andere Materialien mit ausreichendem Ausdehnungskoeffizienten können eingesetzt werden.

Gemäß einer weiteren Ausgestaltung der Erfindung weist die Kolbenstange eine Kolbenachse auf, die parallel, vorzugsweise koaxial, zur Verschieberichtung des Wandabschnittes verläuft. Die Kolbenstange kann dabei benachbart zu dem verschiebbaren Wandabschnitt angeordnet sein, wobei optional ein weiterer Kolben in dem Gehäuse mit dem ausdehnbaren Medium mit der Kolbenstange verbunden sein kann. Dadurch wird ein geringer Bauraum benötigt und zudem kann der Antrieb für den bewegbaren Wandabschnitt aus wenigen Bauteilen gebildet sein.

Vorzugsweise ist eine Zuleitung zu der Brühkammer vorgesehen, die zur Erhitzung und/oder Kühlung des ausdehnbaren Mediums einsetzbar ist. Dadurch ist es möglich, das zum Brühen vorgesehene heiße Wasser vorher zum Erhitzen des ausdehnbaren Mediums zu verwenden. Denn für einen Brühvorgang wird ohnehin eine Pumpe eingesetzt, die zu Beginn der Brühung das Wasser durch einen Heizer pumpt und erhitzt. Dieses heiße Wasser kann um das ausdehnbare Medium herumgeleitet werden, um dieses zu erhitzen. Dadurch wird der verschiebbare Wandabschnitt bewegt, um das in der Brühkammer enthaltene Kaffeemehl zu komprimieren. Das heiße Wasser kann dann zusätzlich für die Kaffeebrühung verwendet werden. Zudem ist es vorteilhaft, wenn in der Zuleitung zu der Brühkammer ein schaltbares Abzweigventil vorgesehen ist. Dies ermöglicht, dass das Wasser wahlweise durch die Brühkammer oder einen Ablass geleitet wird. Zu Beginn des Brühvorganges kann auch ein Teil des heißen Wassers nur zum Erhitzen des ausdehnbaren Mediums eingesetzt werden, wobei dann nach einer kurzen zeitlichen Verzögerung der Brühvorgang eingeleitet wird. Dann kann ein Teil des heißen Wassers durch den Ablass ausgegeben werden. Zudem ist es möglich, dass nach dem Brühvorgang das ausdehnbare Medium mit kaltem Wasser umspült wird, wobei dann das zur Kühlung eingesetzte Wasser durch den Ablass entsorgt werden kann.

Die Rückstellung des Kolbens durch Kühlen des ausdehnbaren Mediums kann nach dem Brühvorgang erfolgen. Herkömmliche Kaffeeautomaten benötigen nach jeder Brühung eine kurze Zeit des Zwischenheizens, um den Heizer für die nächste Tasse auf die notwendige Temperatur zu bringen. Diese Zwischenheizphase kann auch zur Kühlung und Rückstellung des ausdehnbaren Mediums genutzt werden, so dass kein Zeitverlust zwischen den Brühungen entsteht. Das Kühlwasser sollte hierbei am Heizer vorbei geleitet werden.

Gemäß einer weiteren Ausgestaltung der Erfindung ist das ausdehnbare Medium in einem topfförmigen Gehäuse aufgenommen, an dessen Öffnung der Kolben abgedichtet und verschiebbar geführt ist. Dadurch kann der Antrieb als kompakte Einheit in der Vorrichtung eingebaut werden, so dass nur ein geringer Bauraum benötigt wird und vergleichsweise wenige Bauteile erforderlich sind.

Die Erfindung wird nachfolgend an Hand eines Ausführungsbeispiels im Detail erläutert. Es zeigt:

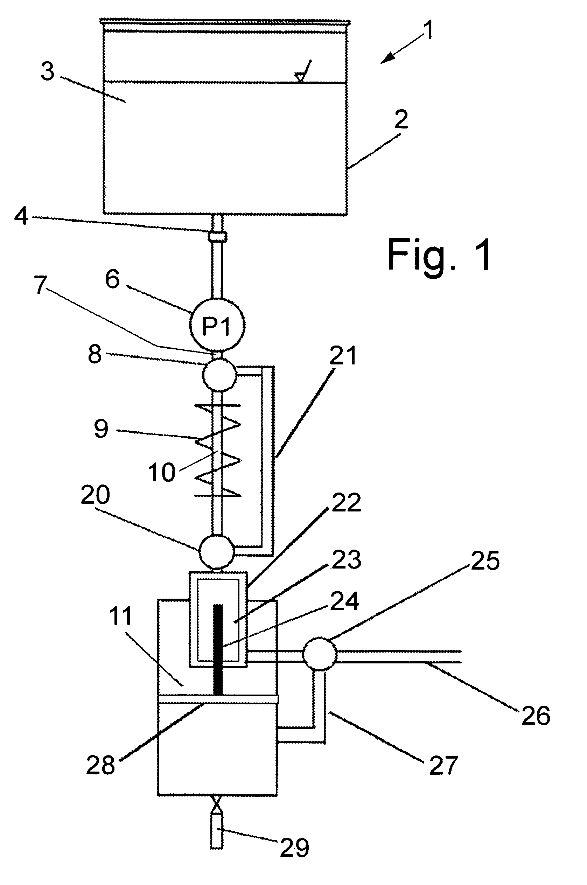

- Figur 1: ein Blockdiagramm einer erfindungsgemäßen Vorrichtung zur Herstel- lung eines Brühgetränks.

Eine Vorrichtung 1 zur Herstellung eines Brühgetränkes umfasst ein Wasserreservoir 2, in dem kaltes Wasser 3 enthalten ist. Das Wasserreservoir 2 kann dabei abnehmbar ausgestaltet sein, um eine Befüllung zu vereinfachen.

Von dem Wasserreservoir 2 erstreckt sich eine Leitung 4 zu einer Pumpe 6 zum Fördern des kalten Wassers. Zum Brühen von Kaffee wird über die Pumpe 6 kaltes Wasser durch eine Leitung 7 gefördert, die zu einem Ventil 8 führt. Hinter dem Ventil 8 ist eine Heizeinrichtung 9 vorgesehen, beispielsweise in Form einer die Leitung 7 umgebenden Heizspirale, in der eine Heizleitung 10 angeordnet ist. Die Heizleitung 10 mündet an einem Sammler 20, hinter dem ein Gehäuse 22 mit einem unter Wärmeeinwirkung ausdehnbarem Medium 23 angeordnet ist.

Um Kaffeemehl oder ein PAD in einer Brühkammer 11 zu komprimieren, ist darin ein verschiebbarer Kolben 28 vorgesehen, der durch Erwärmung eines ausdehnbaren Mediums 23, beispielsweise Wachs, in dem Gehäuse 22 betätigbar ist. Der Kolben 28 ist dabei mit einer Kolbenstange 24 verbunden, die in das Gehäuse 22 eingreift, in dem das ausdehnbare Medium 23 enthalten ist. Das ausdehnbare Medium 23 kann in dem Gehäuse 22 mit heißem Wasser umspült werden, um es zu Erhitzen. Durch die Erhitzung des Wachses wird die Kolbenstange 24 und der Kolben 28 verschoben, und so kann eine Komprimierung des Kaffeemehls in der Brühkammer 11 vorgenommen werden. Das schmelzbare Wachs weist eine möglichst niedrige Schmelztemperatur auf, die jedoch oberhalb der Umgebungstemperatur liegt, um die thermischen Verluste des Brühwassers möglichst gering zu halten.

Für den Brühvorgang kann das heiße Wasser aus dem Gehäuse 22 zu einem Abzweigventil 25 geleitet werden, das mit einer Zuleitung 27 zu der Brühkammer 11 aufweist. Dadurch kann das heiße Wasser sowohl zum Komprimieren des Kaffeemehls beim Durchströmen des Gehäuses 22 als auch für den eigentlichen Brühvorgang in der Brühkammer 11 verwendet werden. Das fertige Heißgetränk wird dann an einem Auslass 29 an der Brühkammer 11 ausgegeben.

Nach dem Brühvorgang kann der Kolben 28 in der Brühkammer 11 wieder zurückgestellt werden, wofür eine Kühlung des ausdehnbaren Mediums 23 notwendig ist. Hierfür ist hinter der Pumpe 6 Ventil 8 vorgesehen, das mit einer Leitung 21 verbunden ist, die parallel zu der Heizeinrichtung 9 und der Heizleitung 10 verläuft. Dadurch kann das kalte Wasser über die Pumpe 6 durch die Leitung 21 direkt zu dem Sammler 20 und dem Gehäuse 22 geleitet werden, um dort das erhitzte ausdehnbare Medium 23 zu umspülen und zu kühlen. Das kalte Wasser kann anschlieβend durch das Abzweigventil 25 strömen und wird dort zu einem Auslass 26 oder einer Rückführung zu dem Wasserreservoir 2 geleitet.

Das ausdehnbare Medium besteht vorzugsweise aus einem Wachs, wobei auch Wachs-Metall-Gemische, wie Wachs-Aluminium, Wachs-Kupfer etc. oder Wachs-Graphit eingesetzt werden können. Das notwendige Volumen für das ausdehnbare Medium ist abhängig von der Rezeptur des Wachses und dem Verfahrweg des Kolbens 28 und kann entsprechen ausgewählt werden.

## Patentansprüche

1. Brühvorrichtung (1), insbesondere für einen Kaffeeautomaten, mit einer Brühkammer (11), die mit pulverförmigen Kaffeemehl befüllbar ist und mindestens einen verschiebbaren Wandabschnitt (28) zum Komprimieren des Kaffeemehls aufweist, wobei die Brühkammer (11) einen Einlass für heißes Wasser und einen Auslass (29) für die Extraktionsflüssigkeit aufweist, **dadurch gekennzeichnet, dass** der verschiebbare Wandabschnitt (28) durch mindestens eine Kolbenstange (24) bewegbar ist, die ebenfalls Teil der Brühvorrichtung ist, und welche Kolbenstange durch Erhitzung oder Kühlung eines ausdehnbaren Mediums (23) bewegbar ist.

2. Brühvorrichtung nach Anspruch 1, **dadurch gekennzeichnet, dass** das ausdehnbare Medium (23) durch heißes oder kaltes Wasser erhitzt bzw. gekühlt werden kann.

3. Brühvorrichtung nach Anspruch 1 oder 2, **dadurch gekennzeichnet, dass** das ausdehnbare Medium (23) aus einem schmelzbaren Wachs gebildet ist.

4. Brühvorrichtung nach einem der Ansprüche 1 bis 3, **dadurch gekennzeichnet, dass** die Kolbenstange (24) parallel zur Verschieberichtung des Wandabschnittes (28) verläuft.

5. Brühvorrichtung nach einem der Ansprüche 1 bis 4, **dadurch gekennzeichnet, dass** eine Zuleitung (7, 19, 21) zu der Brühkammer (11) vorgesehen ist, die zur Erhitzung und/oder Kühlung des ausdehnbaren Mediums (23) einsetzbar ist.

6. Brühvorrichtung nach Anspruch 5, **dadurch gekennzeichnet, dass** in der Zuleitung (7) ein schaltbares Abzweigventil (8) vorgesehen ist, um das Wasser wahlweise durch eine Heizeinrichtung (9) oder eine Leitung (21) ohne Heizeinrichtung zu dem Gehäuse (22) mit dem ausdehnbaren Medium (23) zu leiten.

7. Brühvorrichtung nach einem der Ansprüche 1 bis 6, **dadurch gekennzeichnet, dass** ein Abzweigventil (25) hinter dem Gehäuse (22) mit dem ausdehnbaren Medium (23) vorgesehen ist, und das Wasser wahlweise in die Brühkammer (11) oder zu einem Auslassleitung (26) geleitet werden kann.

8. Brühvorrichtung nach einem der Ansprüche 1 bis 7, **dadurch gekennzeichnet, dass** das ausdehnbare Medium (23) in einem topfförmigen Gehäuse (22) aufgenommen ist, an dessen Öffnung die Kolbenstange (24) abgedichtet und verschiebbar geführt ist.

## Claims

1. Brewing device (1), particularly for a coffee machine, with a brewing chamber (11) fillable with powdered coffee grinds and at least one displaceable wall section (28) for compressing the coffee grinds, wherein the brewing chamber (11) has an inlet for hot water and an outlet (29) for the extraction liquid, **characterised in that** the displaceable wall section (28) is movable by at least one piston rod (24) which is similarly part of the brewing device and which is movable by heating or cooling an expansible medium (23).

2. Brewing device according to claim 1, **characterised in that** the expansible medium (23) can be heated or cooled by hot water or cold water, respectively.

3. Brewing device according to claim 1 or 2, **characterised in that** the expansible medium (23) consists of a meltable wax.

4. Brewing device according to any one of claims 1 to 3, **characterised in that** the piston rod (24) extends parallel to the direction of displacement of the wall section (28).

5. Brewing device according to any one of claims 1 to 4, **characterised in that** a feed duct (7, 19, 21) to the brewing chamber (11) is provided and is usable for heating and/or cooling the expansible medium (23).

6. Brewing device according to claim 5, **characterised in that** a switchable routing valve (8) is provided in the feed duct (7) in order to conduct the water selectably through a heating device (9) or a duct (21) without a heating device to the housing (22) with the expansible medium (23).

7. Brewing device according to any one of claims 1 to 6, **characterised in that** a routing valve (25) is provided behind the housing (22) with the expansible medium (23) and the water can be selectably conducted into the brewing chamber (11) or to an outlet duct (26).

8. Brewing device according to any one of claims 1 to 7, **characterised in that** the expansible medium (23) is received in a pot-shaped housing (22), at the opening of which the piston rod (24) is guided to be sealed and displaceable.

## Revendications

1. Dispositif de brassage (1) en particulier pour une machine à café automatique comportant une chambre de brassage (11) pouvant être remplie de farine de café pulvérulente et au moins une section de paroi coulissante (28) pour comprimer la farine de café, la chambre de brassage (11) comportant une entrée pour l'eau chaude et une sortie (29) pour le liquide extrait,
**caractérisé en ce que**
la section de paroi coulissante (28) peut être déplacée par au moins une tige de piston (24) qui fait également partie du dispositif de brassage, et peut être déplacée par chauffage ou refroidissement d'un milieu dilatable (23).

2. Dispositif de brassage conforme à la revendication 1,
**caractérisé en ce que**
le milieu dilatable (23) peut être chauffé ou refroidi par de l'eau chaude ou froide.

3. Dispositif de brassage conforme à la revendication 1 ou 2,
**caractérisé en ce que**
le milieu dilatable (23) est formé par une cire fusible.

4. Dispositif de brassage conforme à l'une des revendications 1 à 3,
**caractérisé en ce que**
la tige de piston (24) s'étend parallèlement à la direction de coulissement de la section de paroi (28).

5. Dispositif de brassage conforme à l'une des revendications 1 à 4,
**caractérisé en ce qu'**
il comporte une conduite (7, 19, 21) conduisant à la chambre d'ébouillantage (11) et pouvant être utilisée pour chauffer et/ou refroidir le milieu dilatable (23).

6. Dispositif de brassage conforme à la revendication 5,
**caractérisé en ce que**
la conduite (7) est équipée d'une soupape de dérivation (8) pouvant être commutée pour faire passer sélectivement l'eau dans une installation de chauffage (9) ou dans une conduite (21) ne comportant pas d'installation de chauffage pour la transférer vers le boîtier (22) équipé du milieu dilatable (23).

7. Dispositif de brassage conforme à l'une des revendications 1 à 6,
**caractérisé en ce qu'**
il comporte une soupape de dérivation (25) montée en aval du boîtier (22) équipé du milieu dilatable (23), et l'eau peut sélectivement être transférée dans la chambre de brassage (11) ou vers une conduite de sortie (26).

8. Dispositif de brassage conforme à l'une des revendications 1 à 7,
**caractérisé en ce que**
le milieu dilatable (23) est introduit dans un boîtier (22) en forme de pot au niveau de l'ouverture duquel la tige de piston (24) est rendue étanche et guidée en coulissement.
